(19) Europäisches Patentamt
European Patent Office
Office européen des brevets

(11) **EP 3 203 335 A1**

(12) **EUROPEAN PATENT APPLICATION**
published in accordance with Art. 153(4) EPC

(43) Date of publication:
**09.08.2017 Bulletin 2017/32**

(51) Int Cl.:
***G05B 19/409*** *(2006.01)*

(21) Application number: **14903067.8**

(86) International application number:
**PCT/JP2014/076228**

(22) Date of filing: **30.09.2014**

(87) International publication number:
**WO 2016/051549 (07.04.2016 Gazette 2016/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Makino Milling Machine Co., Ltd.
Tokyo 152-8578 (JP)**

(72) Inventors:
• **KAWAI, Rie
Kanagawa 243-0303 (JP)**

• **HEISHI, Hideki
Kanagawa 243-0303 (JP)**
• **ONO, Kenichi
Kanagawa 243-0303 (JP)**
• **HOSHINO, Yoshihiro
Kanagawa 243-0303 (JP)**

(74) Representative: **McWilliams, David John
Withers & Rogers LLP
4 More London Riverside
London SE1 2AU (GB)**

(54) **CONTROL DEVICE FOR MACHINE TOOL**

(57)     In order to make it possible for an operator of a machine tool to easily calculate machining conditions and prevent calculation errors and input errors by the operator, this control device (10) for a machine tool, which machines a work piece on the basis of a machining program, is provided with: a database (16) that stores calculation formulas corresponding to types of calculation, and types of parameters required to execute said calculation formulas; an input unit (12) that selects a type of calculation; and a display unit (20) that displays, on the basis of the type of calculation selected by the input unit, the parameter to be input.

FIG. 1

**Description**

Technical Field

The invention relates to a control device for a machine tool, allowing an operator of the machine tool to calculate the machining conditions easily whereby to prevent human errors in input and/or calculation by operators.

Background Art

The machining conditions, such as the feed rates of the feed devices and the rotational speed of the spindle of a machine tool are described in machining programs. However, in some cases, an operator actually must input the feed rates and the spindle rotation speed directly into an NC device at the site, e.g., a factory, or create or edit an NC program in the vicinity of a machine tool, based on the operator's experiences. The data to be input into an NC device, when an operator creates or edits an NC program at the side, e.g., a factory, include values which must be calculated by the operator by using a desk calculator. Further, in some cases, an operator must select the data and parameters necessary for the calculation from a specification with visual observation and input them into a calculator, which s troublesome, possibly resulting in an error in data input. Furthermore, an input error may be caused, when the calculation results are input into an NC device.

In order to prevent such human errors, Patent Literature 1 describes an NC device for a machine tool, which is provided with a tool database for storing tool data such as the diameters or the radiuses, the numbers of teeth and the lengths of tools, and configured to calculate and display the circumferential speed and the feed per tooth, based on the current feed rates and the spindle rotation speed. Further, Patent Literature 2 describes a numerical control device including a setting and displaying device configured to set and display the data, wherein the displayed window has a desk calculator function.

Prior art Documents

Patent Publications

Patent Literature 1: JP-A-H11-296214
Patent Literature 2: JP-A-H05-2207

Summary of the Invention

Problems to be Solved by the Invention

In the invention of Patent Literature 1, while the circumferential speed of the cutting edges and the feed per tooth can be calculated, the machining conditions, such as the cutting speed, the feed rate, the spindle rotation speed, the cusp height, the pick feed and the material removal rate, cannot be calculated, and therefore human errors, such as errors in input and/or calculation cannot be prevented.

Further, in the inventions of documents 1 and 2, the current coordinate of a machine tool cannot to be read as an input data, and the calculation results cannot be delivered to a machining program as arguments, and therefore human errors cannot be prevented.

The invention is directed to solve the problems of the prior art, and the object of the invention is to provide a control device for a machine tool, improved to allow an operator to calculate machining conditions and thereby prevent errors in input and/or calculation by operators.

Means for Solving the Problems

In order to achieve the above described object, according to the invention, a control device for a machine tool for machining a workpiece based on a machining program, comprising a database configure to store calculation formulas corresponding to calculation types and types of parameter necessary for carrying out the calculations, an input section for selecting a calculation type, and a displaying section for displaying parameter to be input based on the calculation type selected in the input section is provided.

Effect of the Invention

According to the invention, the calculation formulas corresponding to the calculation types and the types of parameter necessary for carrying out the calculations are stored in the database, so that when an operator selects a calculation type by using the input section, the parameter to be input is displayed based on the selected calculation type, enabling human errors in input and/or calculation by operators to be prevented.

Brief Description of the Drawings

Figure 1 is a block diagram of a control device for a machine tool according to a preferred embodiment of the invention.
Figure 2 is a schematic front view of an operation panel of a machine tool according to an embodiment of the invention.
Figure 3 is an illustration showing an example of a desk calculator shown in a display of the operation panel of Figure 2.
Figure 4 is an illustration showing an example of a window, displayed on the display of the operation panel of Figure 2, for calculating the cutting speed as a machining condition.
Figure 5 is an illustration showing an example of a window, displayed on the display of the operation panel of Figure 2, for calculating the feed per tooth as the machining condition.

Figure 6 is an illustration showing an example of a window, displayed on the display of the operation panel of Figure 2, for calculating the feed rate as the machining condition.

Figure 7 is an illustration showing an example of a window, displayed on the display of the operation panel of Figure 2, for calculating the spindle rotation speed as the machining condition.

Figure 8 is an illustration showing an example of a window, displayed on the display of the operation panel of Figure 2, for calculating the cutting speed as the machining condition.

Figure 9 is an illustration showing an example of a window, displayed on the display of the operation panel of Figure 2, for calculating the cusp height as the machining condition.

Figure 10 is an illustration showing an example of a window, displayed on the display of the operation panel of Figure 2, for calculating the pick feed as the machining condition.

Figure 11 is an illustration showing an example of a window, displayed on the display of the operation panel of Figure 2, for calculating the cusp height as the machining condition.

Figure 12 is an illustration showing an example of a window, displayed on the display of the operation panel of Figure 2, for calculating the material removing rate (the material removed from the workpiece) as the machining condition.

Figure 13 is an illustration showing an example of a window, displayed on the display of the operation panel of Figure 2, for calculating the coordinate system.

Figure 14 is an illustration showing an example of an icon indicating a command for reading the current X-and Y-coordinates, displayed in the window of Figure 13.

Figure 15 is an illustration showing an example of an icon indicating a command for reading the current X-, Y- or Z-coordinate, displayed in the window of Figure 13.

Figure 16 is an illustration showing an example of an icon indicating a command for calculating the midpoint between two points, displayed in the window of Figure 13.

Figure 17 is an illustration showing an example of an icon indicating a command for calculating the inclination between two points, displayed in the window of Figure 13.

Figure 18 is an illustration showing an example of an icon indicating a command for calculating the intersection between two lines, displayed in the window of Figure 13.

Figure 19 is an illustration showing an example of an icon indicating a command for calculating the coordinates after rotation, displayed in the window of Figure 13.

Figure 20 is an illustration showing an example of an icon indicating a command for calculating the width, displayed in the window of Figure 13.

Mode for Carrying out the Invention

With reference to the attached drawings, a preferred embodiment of the invention will be described below.

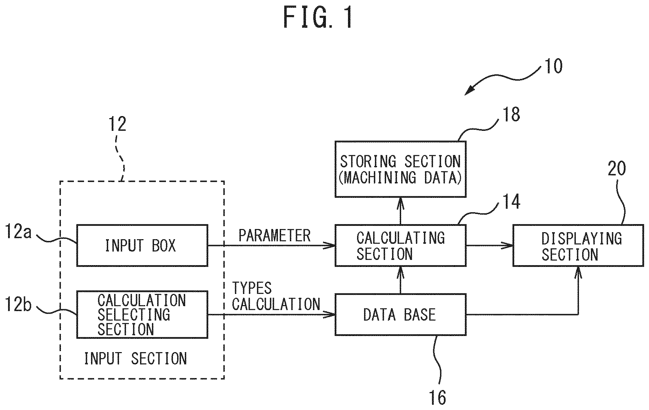

With reference to Figure 1, which is a schematic block diagram of a control device of a machine tool according the a preferred embodiment of the invention, the control device 10 comprises as main parts an input section 12, a calculating section 14, a database 16, a storing section 18 and a displaying section 20.

The input section 12 is formed by a window displayed on the displaying section 20, which can be formed of a touch panel or the like, and as described below, includes an input box 12a and a calculation selecting section 12b formed by a drop down list. In the database 16, a various calculation formulas are stored in association with calculation types. Further, in the database 16, parameters such as the tool the diameter D, the tool length L, the number of teeth N, the feed per tooth fz, the feed rates F and the rotational speed S are stored in association with each of tool numbers.

When a calculation type is selected in the calculation selecting section 12b, the corresponding calculation formula and the necessary parameters are read from the database 16 and sent to the calculating section 14, whereby the calculation is carried out by the calculating section 14. The calculation results are stored in the storing section 18, and may be sent to for example an NC device (not shown) from the storing section 18.

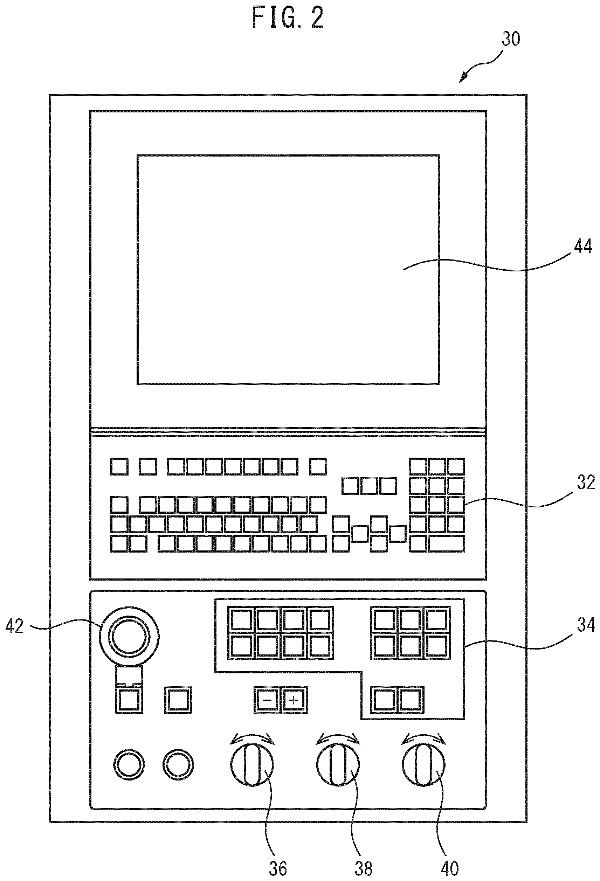

A front view of an operating panel mounted to a control device of a machine tool is shown in Figure 2. With reference to Figures 1 and 2, an operating panel 30 includes a display panel 44 forming the displaying section 20 of Figure 1. The display panel 44 according to this embodiment can be formed by a touch panel, enabling to select a desired portion by contacting the window. In the display panel 44, a window forming the input section 12 is displayed.

The operating panel 30 includes a key input portion 32. A plurality of key switches are disposed in the key input portion 32. By depressing a key switch of the key input portion 32, a predetermined number and/or character can be input. Further, the operating panel 30 includes operation switch portion 43 for selecting a predetermined operation, an override setting portion 36-40 for setting the override value and an emergency shutdown button 42. The override setting portion 36-40 allows to set for example the override value for the spindle rotation speed and the feed rates for machining.

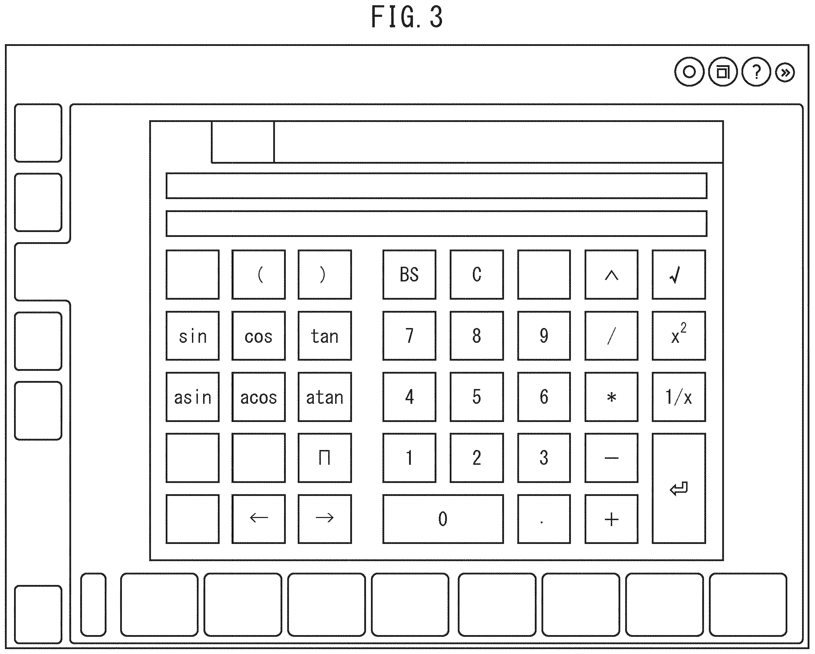

Figure 3 illustrates the desk calculator shown in the displaying section 20 (display panel 40). This display mode allows an operator to make desired calculations.

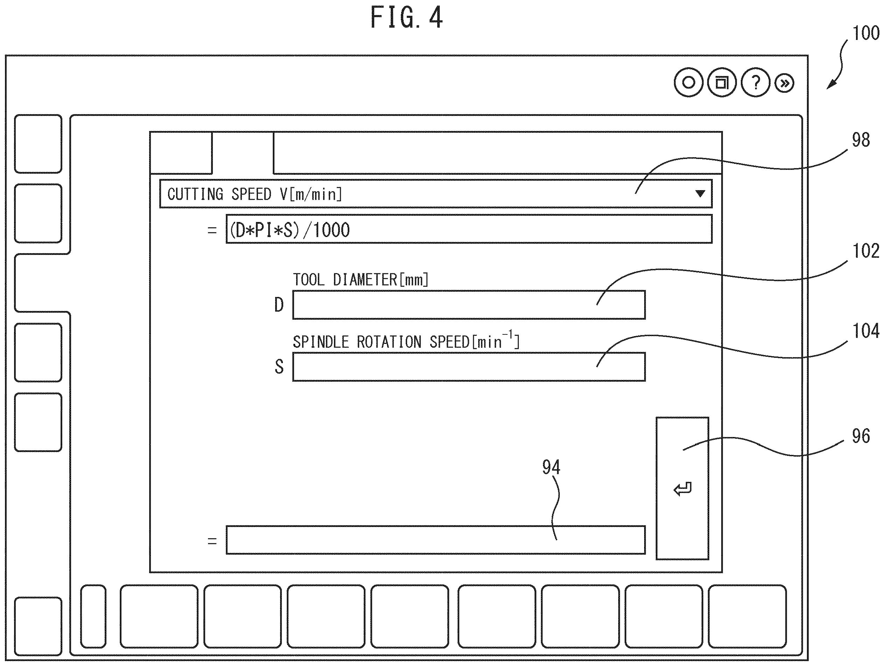

Figure 4 shows a window 100 for calculating the cutting speed V (m/min), as a calculation type, based on the spindle rotational speed S (min$^{-1}$) and the tool diameter (mm). When an operator selects the cutting speed (m/min) by using the dropdown list 98, the calculation formula and the necessary parameters for calculation, i.e., the tool diameter and the spindle rotation speed are displayed. Further, input boxes 102 and 104 are displayed below the respective parameters. When appropriate values for the tool diameter D (mm) and the spindle rotation speed S (min$^{-1}$), are input into the input boxes 102 and 104, the cutting speed V (m/min) is calculated based on the calculation formula, i.e., $V=(D\times\pi\times S)/1000$, and displayed in an output box 94.

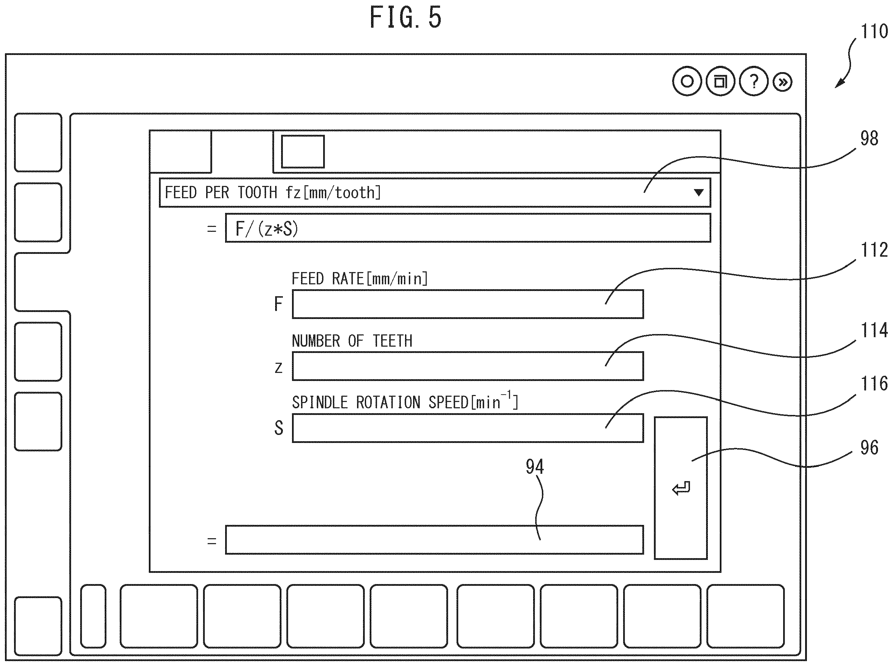

Figure 5 shows a window 110 for calculating the feed per tooth fz (mm/tooth), as a calculation type, based on the spindle rotation speed S (min$^{-1}$), the number of teeth Z and the feed rate F (mm/min). When an operator selects the feed per tooth (mm/tooth) by using the dropdown list 98, the calculation formula and the necessary parameters for calculation, i.e., the spindle rotation speed, number of teeth and the feed rate are displayed. Further, input boxes 112, 114 and 116 are displayed below the respective parameters. When appropriate values for the feed rate F (mm/min), the number of teeth Z and the feed rate F (mm/min), are input into the input boxes 112, 114 and 116, the feed per tooth fz (mm/tooth) is calculated based on the calculation formula, i.e., $fz=F/(2\times S)$, and displayed in the output box 94.

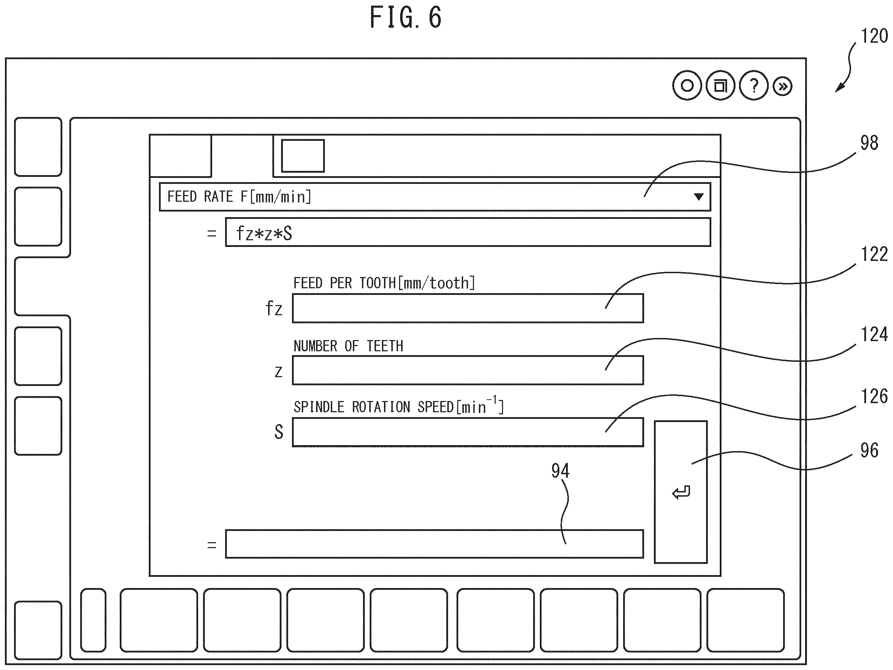

Figure 6 shows a window 120 for calculating the feed rate F (mm/min), as a calculation type, based on the feed per tooth fz (mm/tooth), the spindle rotation speed S (min$^{-1}$) and the number of teeth Z. When an operator selects the feed rate F (mm/min) by using the dropdown list 98, the calculation formula and the necessary parameters for calculation, i.e., the feed per tooth, the spindle rotation speed and the number of teeth are displayed. Further, input boxes 122, 124 and 126 are displayed below the respective parameters. When appropriate values for the feed per tooth (mm/tooth), the number of teeth Z and the spindle rotation speed S (min$^{-1}$), are input into the input boxes 122, 124 and 126, the feed rate F (mm/min) is calculated based on the calculation formula, i.e., $F=fz\times Z\times S$, and displayed in the output box 94.

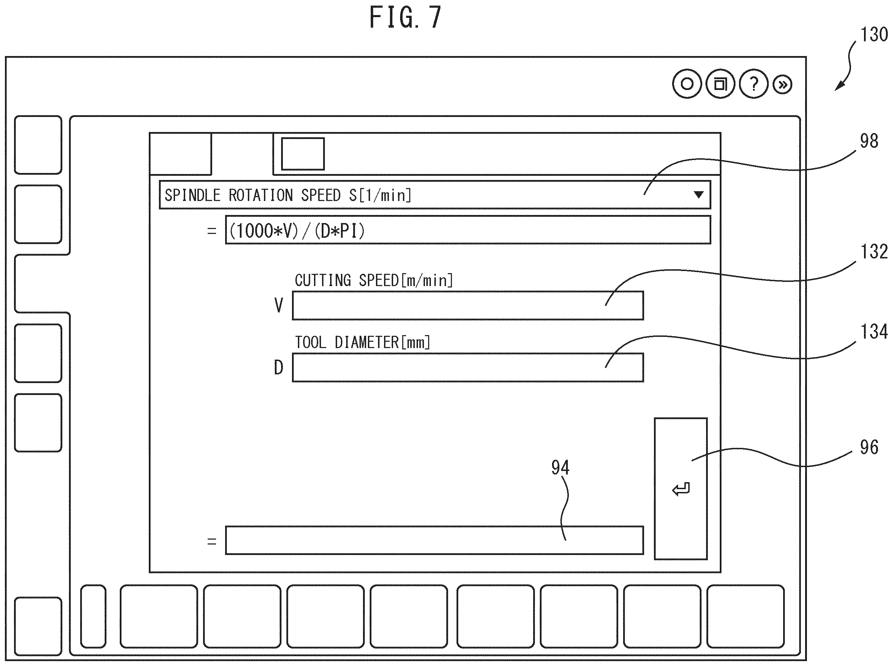

Figure 7 shows a window 130 for calculating the spindle rotation speed S (min$^{-1}$), as a calculation type, based on the cutting speed V (m/min) and the tool diameter D (mm). When an operator selects the spindle rotation speed (min$^{-1}$) by using the dropdown list 98, the calculation formula and the necessary parameters for calculation, i.e., the spindle rotation speed and the tool diameter are displayed. Further, input boxes 132 and 134 are displayed below the respective parameters. When appropriate values for the cutting speed V (m/min) and the tool diameter D (mm) are input into the input boxes 132 and 134, the spindle rotation speed S (min$^{-1}$) is calculated based on the calculation formula, i.e., $S=(1000\times V)/(D\times\pi)$, and displayed in the output box 94.

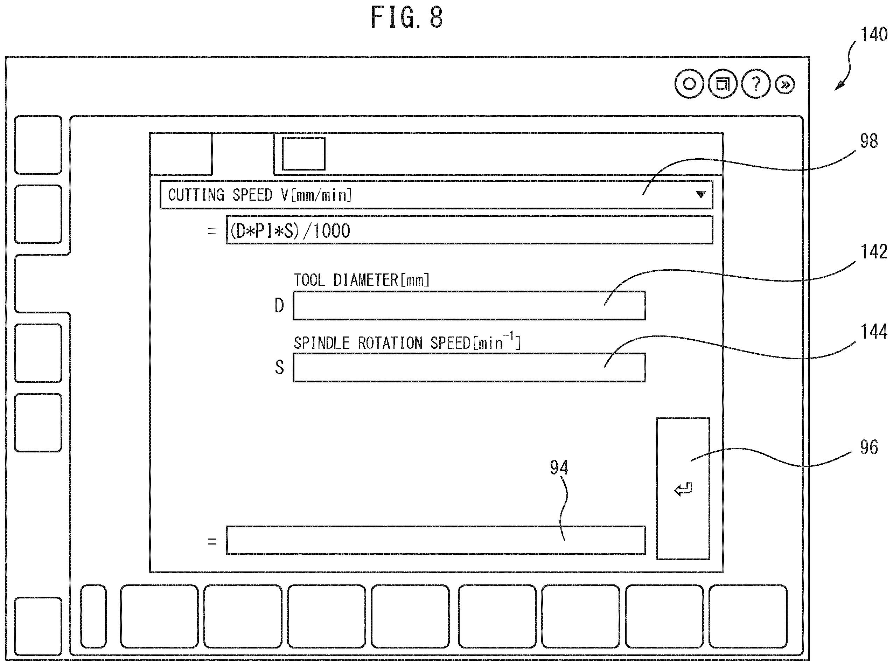

Figure 8 shows a window 140 for calculating the cutting speed V (m/min), as a calculation type, based on the spindle rotation speed S (min$^{-1}$) and the tool diameter D (mm). When an operator selects the cutting speed V (m/min) by using the dropdown list 98, the calculation formula and the necessary parameters for calculation, i.e., the spindle rotation speed and the tool diameter are displayed. Further, input boxes 142 and 144 are displayed below the respective parameters. When appropriate values for the tool diameter D (mm) and the spindle rotation speed (min$^{-1}$) are input into the input boxes 142 and 144, the cutting speed V (m/min) is calculated based on the calculation formula, i.e., $V=(D\times\pi\times S)/1000$, and displayed in the output box 94.

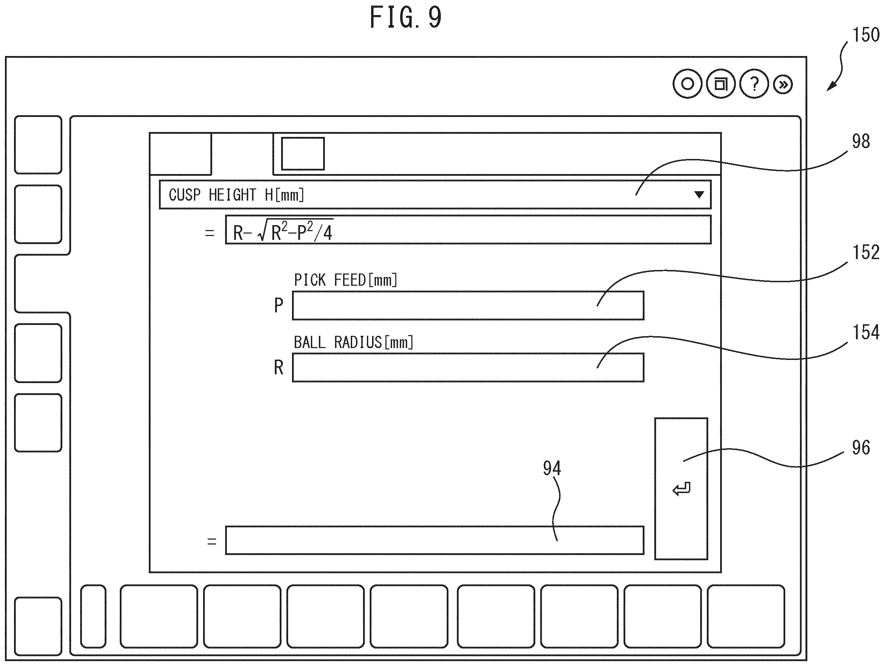

Figure 9 shows a window 150 for calculating the cusp height H (mm), as a calculation type, based on the pick feed P (mm) and the ball radius R (mm) at the end of a ball endmill. When an operator selects the cusp height (mm) by using the dropdown list 98, the calculation formula and the necessary parameters for calculation, i.e., the pick feed and the tool diameter are displayed. Further, input boxes 152 and 154 are displayed below the respective parameters. When appropriate values for the pick feed P (mm) and the ball radius (min) are input into the input boxes 152 and 154, the cusp height H (mm) is calculated based on the calculation formula, i.e., $H=(R^2-p^2/4)^{1/2}$, and displayed in the output box 94.

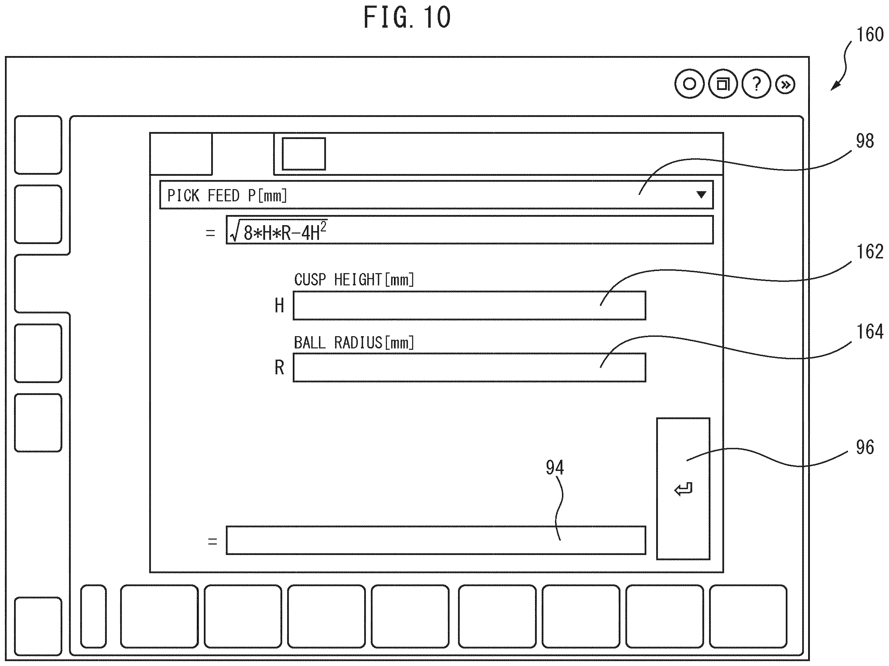

Figure 10 shows a window 160 for calculating the pick feed P (mm), as a calculation type, based on the cusp height H (mm) and the ball radius R (mm). When an operator selects the pick feed P (mm) by using the dropdown list 98, the calculation formula and the necessary parameters for calculation, i.e., the cusp height and the tool diameter are displayed. Further, input boxes 162 and 164 are displayed below the respective parameters. When appropriate values for the cusp height (mm) and the ball radius R (min) are input into the input boxes 162 and 164, the pick feed P (mm) is calculated based on the calculation formula, i.e., $P=(8\times H\times R-4H^2)^{1/2}$, and displayed in the output box 94.

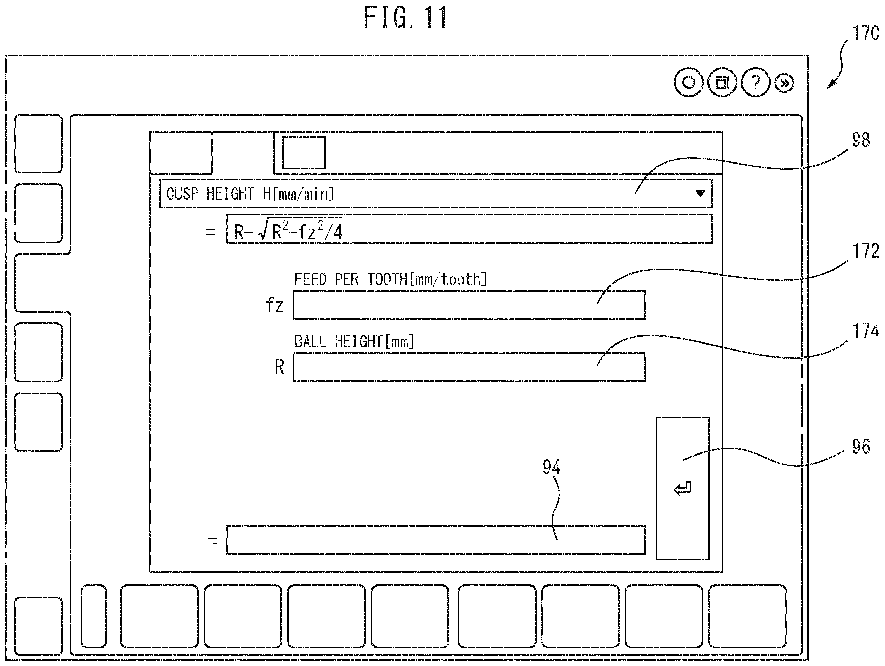

Figure 11 shows a window 170 for calculating the cusp height (mm), as a calculation type, based on the feed per tooth fz (mm/tooth) and the ball radius R (min). When an operator selects the cusp height (mm) by using the dropdown list 98, the calculation formula and the necessary parameters for calculation, i.e., the feed per tooth and the ball radius are displayed. Further, input boxes 172 and 174 are displayed below the respective parameters. When appropriate values for the feed per tooth fz (mm/tooth) and the ball radius R (min) are input into the input boxes 172 and 174, the cusp height (mm) is calculated based on the calculation formula, i.e., $H=R-(R^2-fz^2/4)^{1/2}$, and displayed in the output box 94.

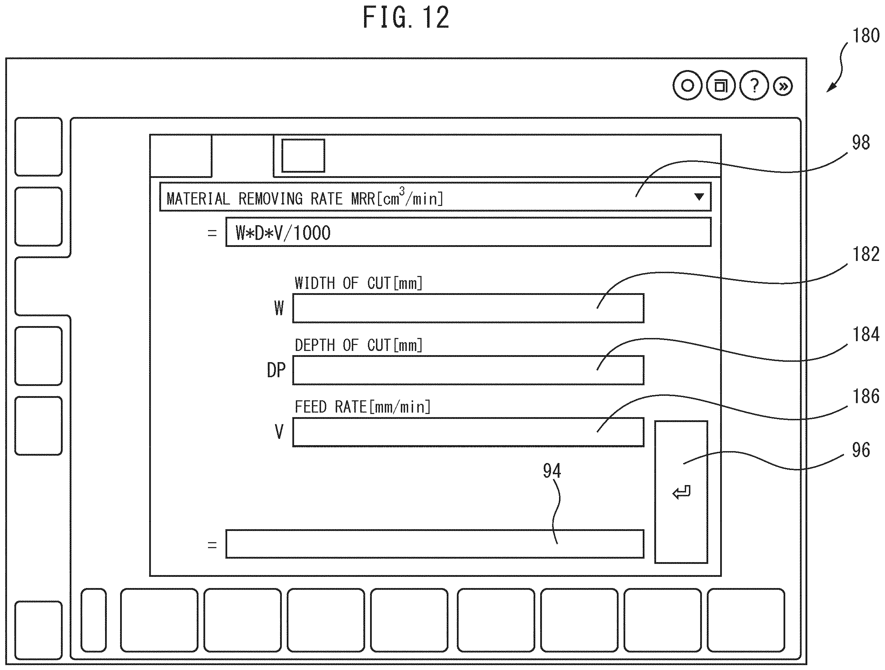

Figure 12 shows a window 180 for calculating the material removal rate MRR (cm$^3$/min), as a calcula-

tion type, based on the width of cut W (mm), the depth of cut DP (mm) and the feed rate F (mm/min). When an operator selects the material removal rate MRR (cm³/min) by using the dropdown list 98, the calculation formula and the necessary parameters for calculation, i.e., the width of cut, the depth of cut and the feed rate are displayed. Further, input boxes 182, 184 and 186 are displayed below the respective parameters. When appropriate values for the width of cut W (mm), the depth of cut DP (mm) and the feed rate F (mm/min) are input into the input boxes 182, 184 and 186, the material removal rate MRR (cm³/min) is calculated based on the calculation formula, i.e., MRR=W×DP×F/1000, and displayed in the output box 94.

Accordingly, the calculated machining conditions are stored in the storing section 18 of the control device 10, from which they can be output to for example an NC device, or can be delivered, when an operator edits a machining program, as arguments to the machining program. When being delivered to a machining program as arguments, the numerical values or the calculation results may be attached with alphabets (X, Y, Z, S, F and so on) representing the meanings of the numerical values, or added with decimal points, if necessary, in order to adjust the effective digits. Further, the numerical values or the calculation results may be used for more complex calculations, such as cutting resistances N (Kgf).

$$N=(1900×Ad×Rd×fz×Z×K)/D×Q$$

where:

    Ad: Axial Depth of Cut (mm)
    Rd: Radial Depth of Cut (mm)
    fz: Feed Per Tooth (mm/tooth)
    Z: Number of Teeth
    K: Material Coefficient Shown in Table 1
    D: Tool Diameter (mm)
    Q: Cutting Efficiency Shown in Table 2

[Table 1]

| Material JIS (ANSI) | K |
|---|---|
| Inconel | 1.7 |
| SKD61 | 1.6-1.7 |
| NAK80 (Preharded Steel) | 1.2-1.7 |
| NAK80 (Preharded Steel) | 1.1-1.3 |
| SUS304 (ASTM; S30300) | 1.0-1.1 |
| S55C (1055) | 1 |
| Ti-6Al-4V | 0.8-1.1 |
| FC25 (ASTM; class No. 40) | 0.8-0.9 |

(continued)

| Material JIS (ANSI) | K |
|---|---|
| A5052 (5052) | 0.3-0.4 |

[Table 2]

| fz (mm/tooth) | Q |
|---|---|
| 0.1 | 24 |
| 0.2 | 31 |
| 0.3 | 36 |
| 0.4 | 38 |

The data such as the material coefficients shown in Table 1 and the cutting efficiency relative to the feed per tooth shown in Table 2 are stored in the data base 16 so as to be read by the calculating section 14 and used for the calculations. Accordingly, an operator can decide the machining conditions so that the cutting resistances N (Kgf) falls within an allowable range.

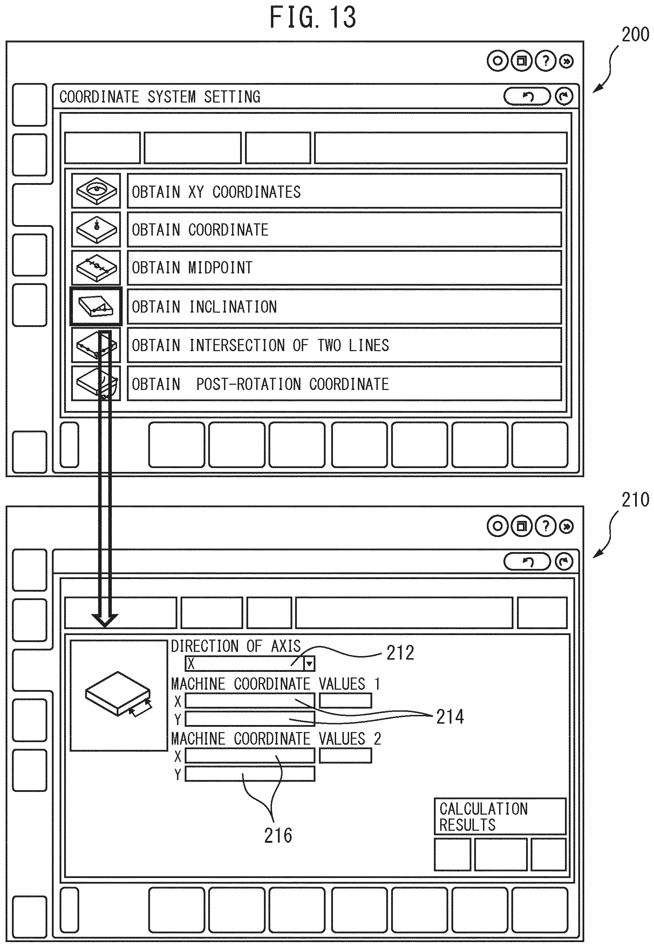

With reference to Figure 13, a window for calculating the coordinate of the workpiece is shown. When opening the window for setting the coordinate system of the machine tool, the window 200 illustrated in Figure 13 is displayed in the displaying section 20. In the window 200, icons are arranged in the left side and concise explanations of the calculations are shown at the right sides of the respective icons. The upper part of Figure 13 shows that an inclination obtaining icon, for calculating and obtaining the inclination of a line passing through two points, is selected. An inclination obtaining window 210 displayed by selecting the icon is illustrated in the lower part of Figure 13.

The inclination obtaining window 210 includes an axis selecting portion 212 for selecting a reference axis for calculating inclination C and coordinate inputting portions 214, 216 for inputting the X-coordinates and Y-coordinates of the two points. When inputting the X-coordinates and Y-coordinates of two points, the inclination of the line extending through the two points is calculated based on a calculation formula, i.e., $C=ATAN(y_2-y_1)/(x_2-x_1)$, the calculation results of which is displayed. The inclination C is stored in the storing section 18.

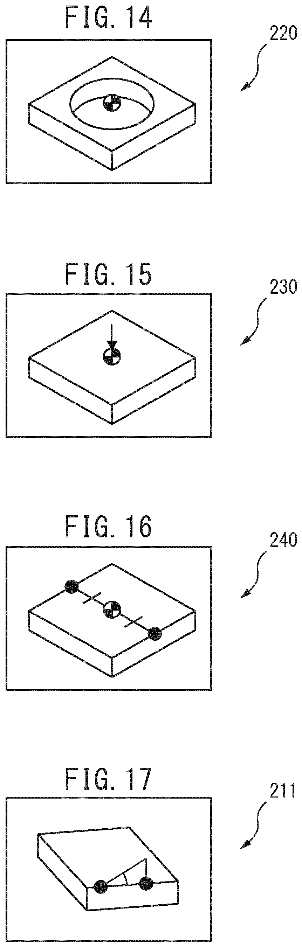

Figure 14 shows an XY coordinate obtaining icon 220, for obtaining the current X- and Y-coordinates. When clicking the XY coordinate obtaining icon 220, a coordinate obtaining window for obtaining the coordinates, similar to that shown in the lower part of Figure 13, is displayed. The readings of position sensors (not shown) such as X- and Y-axes scales are stored in for example a predetermined storing region of the database 16.

Figure 15 shows a one coordinate obtaining icon 230 used to select and store one of the current X-, Y- and Z-coordinates. When clicking the one coordinate obtaining icon 230, a one coordinate obtaining window for obtaining a coordinate, similar to that shown in the lower part of Figure 13, is displayed. The reading of a position sensor for the corresponding axis, such an X-, Y- or Z-axis scale, is stored in for example a predetermined storing region of the database 16.

Figure 16 shows a midpoint obtaining icon 240 used to calculate and obtain the midpoint between two points. Figure 17 shows an icon 211 displayed in the inclination obtaining window 210.

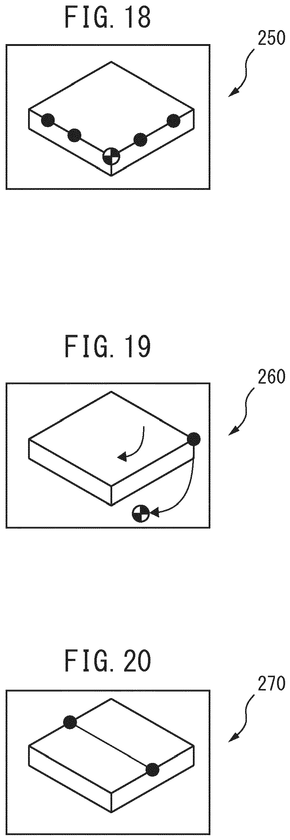

Figure 18 shows an intersection obtaining icon 250 used to obtain an intersection between two lines. The intersection PC (X, Y), in the X-Y plane, between a line $L_1$ extending through two points $(x_1, y_1)$ and $(x_2, y_2)$ and a line $L_2$ extending through another two points (x3, y3) and (x4, y4) is calculated by the following formulas.

$$X=(A_1 \times x_1 - y_3 - A_3 \times x_3 + y_3) / (A_1 - A_3)$$

$$Y=A1 \times (X - x_1) + y_1$$

Where:

$$A1=(y_2 - y_1) / (x_2 - x_1)$$

$$A3=(y_4 - y_3) / (x_4 - x_3)$$

The coordinate values of the four points $(x_1, y_1)$, $(x_2, y_2)$, $(x_3, y_3)$ and $(x_4, y_4)$ may be read by contacting a touch sensor attached an end of a spindle with desired points on a workpiece.

Figure 19 shows a post-rotation coordinate obtaining icon 260 used to obtain the coordinate after the workpiece is rotated. The coordinate PR (X, Y, Z), after the rotation about the X-axis by an angle θ, is calculated by the following formulas.

$$X=x$$

$$Y=\cos \theta \times y - \sin \theta \times z$$

$$Z=\sin \theta \times y + \cos \theta \times z$$

The coordinate PR (X, Y, Z), after the rotation about the Y-axis by an angle θ, is calculated by the following formulas.

$$X=\cos \theta \times x + \sin \theta \times z$$

$$Y=y$$

$$Z=-\sin \theta \times x + \cos \theta \times z$$

The coordinate PR (X, Y, Z), after the rotation about the Z-axis by an angle θ, is calculated by the following formulas.

$$X=\cos \theta \times x - \sin \theta \times y$$

$$Y=\sin \theta \times x + \cos \theta \times y$$

$$Z=z$$

The current coordinate (x, y, z) can be read by contacting a touch sensor with a desired point on a workpiece.

Figure 20 shows a width obtaining icon used to obtain the length in X-, Y- or Z-axial direction. The width L is calculated by the following formulas.

$$Lx=|x_2 + x_1|$$

$$Ly=|y_2 + y_1|$$

$$Lz=|z_2 + z_1|$$

The current coordinate (x, y, z) can be read by contacting a touch sensor with a desired point on a workpiece.

Reference Signs List

| 10 | Control Device |
|----|----------------|
| 12 | Input Section |
| 12a | Input Box |
| 14 | Calculating Section |
| 16 | Database |
| 18 | Storing Section |
| 20 | Displaying Section |

**Claims**

1. A control device for a machine tool for machining a workpiece based on a machining program, **characterized by** comprising:

   a database configure to store calculation formulas corresponding to calculation types and types of parameter necessary for carrying out the calculations;
   an input section for selecting a calculation type; and
   a displaying section for displaying parameter to be input based on the calculation type selected in the input section.

2. The control device according to claim 1, wherein the input section includes a calculation selecting section for allowing an operator to select a calculation type and an input box allowing an operator to input numerical value as the parameter.

3. The control device according to claim 1, wherein the current coordinate value is automatically read into the database as the numerical value to be input as the parameter.

4. The control device according to claim 2, wherein the calculation selecting section is displayed by a dropdown menu in the displaying section.

5. The control device according to claim 2, further comprising a storing section for storing the calculation results.

# FIG. 1

10

18

12

20

12a —— INPUT BOX

PARAMETER →

STORING SECTION
(MACHINING DATA)

14

12b —— CALCULATION
SELECTING
SECTION

TYPES
CALCULATION →

CALCULATING
SECTION

DISPLAYING
SECTION

INPUT SECTION

DATA BASE

16

# FIG. 2

FIG. 3

EP 3 203 335 A1

FIG. 4

CUTTING SPEED V[m/min]

= (D*PI*S)/1000

TOOL DIAMETER[mm]

D

SPINDLE ROTATION SPEED[min$^{-1}$]

S

=

EP 3 203 335 A1

## FIG. 5

# FIG. 6

EP 3 203 335 A1

FEED RATE F[mm/min] ▼

= | fz*z*S |

FEED PER TOOTH[mm/tooth]

fz | |

NUMBER OF TEETH

z | |

SPINDLE ROTATION SPEED[min$^{-1}$]

S | | ↵

= | |

FIG. 7

SPINDLE ROTATION SPEED S[1/min]

= (1000*V)/(D*PI)

CUTTING SPEED[m/min]

V

TOOL DIAMETER[mm]

D

=

EP 3 203 335 A1

# FIG. 8

CUTTING SPEED V[mm/min] ▼

= (D*PI*S)/1000

TOOL DIAMETER[mm]

D

SPINDLE ROTATION SPEED[min⁻¹]

S

=

FIG. 9

CUSP HEIGHT H[mm]

$= R - \sqrt{R^2 - P^2/4}$

PICK FEED[mm]

P

BALL RADIUS[mm]

R

=

150

98

152

154

96

94

16

# FIG. 10

PICK FEED P[mm]

$$= \sqrt{8*H*R-4H^2}$$

CUSP HEIGHT[mm]

H

BALL RADIUS[mm]

R

=

EP 3 203 335 A1

## FIG. 11

170

EP 3 203 335 A1

CUSP HEIGHT H[mm/min] ▼

98

$$= \boxed{R - \sqrt{R^2 - fz^2/4}}$$

FEED PER TOOTH[mm/tooth]

fz

172

BALL HEIGHT[mm]

R

174

↵

96

94

=

# FIG. 12

MATERIAL REMOVING RATE MRR[cm$^3$/min]

= W*D*V/1000

WIDTH OF CUT[mm]
W

DEPTH OF CUT[mm]
DP

FEED RATE[mm/min]
V

=

# FIG. 13

200

**COORDINATE SYSTEM SETTING**

- OBTAIN XY COORDINATES
- OBTAIN COORDINATE
- OBTAIN MIDPOINT
- OBTAIN INCLINATION
- OBTAIN INTERSECTION OF TWO LINES
- OBTAIN  POST-ROTATION COORDINATE

210

DIRECTION OF AXIS — 212
X

MACHINE COORDINATE VALUES 1
X
Y — 214

MACHINE COORDINATE VALUES 2
X
Y

216

CALCULATION RESULTS

FIG. 14

220

FIG. 15

230

FIG. 16

240

FIG. 17

211

FIG. 18

250

FIG. 19

260

FIG. 20

270

## INTERNATIONAL SEARCH REPORT

| International application No. |
|---|
| PCT/JP2014/076228 |

**A. CLASSIFICATION OF SUBJECT MATTER**

*G05B19/409(2006.01)i*

According to International Patent Classification (IPC) or to both national classification and IPC

**B. FIELDS SEARCHED**

Minimum documentation searched (classification system followed by classification symbols)

G05B19/409

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-282909 A (Sodick Co., Ltd.), 03 December 2009 (03.12.2009), paragraphs [0001], [0021] to [0031], [0095] to [0100], [0140]; fig. 1 to 7 (Family: none) | 1–5 |
| Y | JP 2009-295056 A (Keyence Corp.), 17 December 2009 (17.12.2009), paragraphs [0001], [0042] to [0047]; fig. 6 to 7 (Family: none) | 1–5 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 December, 2014 (03.12.14) | 16 December, 2014 (16.12.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/076228

C (Continuation). DOCUMENTS CONSIDERED TO BE RELEVANT

| Category* | Citation of document, with indication, where appropriate, of the relevant passages | Relevant to claim No. |
|---|---|---|
| Y | JP 62-120940 A (Hitachi Seiki Co., Ltd.), 02 June 1987 (02.06.1987), page 1, lower left column, line 19 to lower right column, line 2; page 3, upper right column, line 13 to lower left column, line 1 (Family: none) | 3 |
| Y | JP 62-256104 A (Brother Industries, Ltd.), 07 November 1987 (07.11.1987), claims (Family: none) | 5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11296214 A
- JP H052207 A